# EUROPÄISCHE PATENTSCHRIFT

(11) **EP 3 649 448 B1**
(45) Veröffentlichungstag und Bekanntmachung des Hinweises auf die Patenterteilung: **09.04.2025**
(21) Anmeldenummer: 18762813.6
(22) Anmeldetag: 28.08.2018
(51) Int. Cl.: G01J 1/44

(54) **VERFAHREN ZUM ZÄHLEN VON PHOTONEN MITTELS EINES PHOTOMULTIPLIERS**
METHOD FOR COUNTING PHOTONS BY MEANS OF A PHOTOMULTIPLIER
PROCÉDÉ DE COMPTAGE DE PHOTONS AU MOYEN D'UN PHOTOMULTIPLICATEUR

(30) Priorität: 28.08.2017 DE 102017119663
(43) Veröffentlichungstag der Anmeldung: 13.05.2020
(73) Patentinhaber: Leica Microsystems CMS GmbH, 35578 Wetzlar (DE)
(72) Erfinder: BIRK, Holger, 74909 Meckesheim (DE); WIDZGOWSKI, Bernd, 69221 Dossenheim (DE)
(74) Vertreter: Dehns Germany Partnerschaft mbB
(86) Internationale Anmeldenummer: PCT/EP2018/073093
(87) Internationale Veröffentlichungsnummer: WO 2019/042973

(56) Entgegenhaltungen:
- JP-A- 2004 144 734
- JP-A- 2006 300 728
- US-A1- 2008 099 689
- US-B1- 6 188 473
- SUCBEI MOON ET AL: "Analog single-photon counter for high-speed scanning microscopy", OPTICS EXPRESS, 1 September 2008 (2008-09-01), United States, pages 13990 - 17105, XP055528324, Retrieved from the Internet <URL:https://www.osapublishing.org/DirectPDFAccess/AFC8EE5F-AFF8-EFCB-B56A01E6A85C967E_171295/oe-16-18-13990.pdf?da=1&id=171295&seq=0&mobile=no> DOI: 10.1364/OE.16.013990

## Beschreibung

Die vorliegende Erfindung betrifft ein Verfahren zum Zählen von Photonen mittels eines Photomultipliers, eine Recheneinheit und ein Computerprogramm zu dessen Durchführung sowie ein Mikroskopsystem zur Ausführung des Verfahrens.

### Stand der Technik

Beispielsweise in der konfokalen Mikroskopie werden möglichst empfindliche Lichtdetektoren eingesetzt, um das von der Probe ausgehende Fluoreszenzlicht mit einem möglichst guten Signal/Rauschverhältnis und quantitativ so genau wie möglich zu erfassen. Hierzu eignen sich unterschiedliche Typen von Photomultipliern. Es ist insbesondere wünschenswert, hierzu auch Halbleiter-Photomultiplier (HlPM) wie Silizium-Photomultiplier (SiPM) einzusetzen, da diese bei vergleichsweise geringen Kosten Vorteile bei Empfindlichkeit, Zeitauflösung und Robustheit bieten.

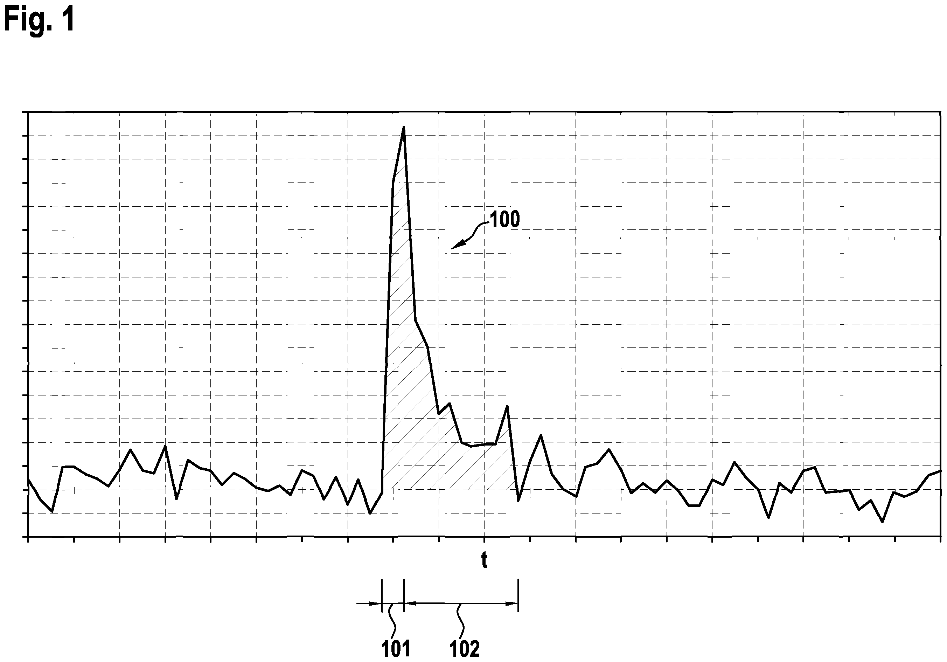

Bei einem HlPM entsteht aus jedem detektierten Photon ein analoger Puls 100, wobei ein typischer Signalverlauf (Intensität über Zeit) in Figur 1 gezeigt ist. Die Pulsform teilt sich in einen schnellen Anstieg 101 im ns- bis sub-ns-Bereich sowie einen Abfall 102 im Bereich von typischerweise 20-100ns auf. Die Signalhöhe ist im Wesentlichen durch die Vorspannung oberhalb des Lawinendurchbruchs sowie die Kapazität der einzelnen Zelle, sowie natürlich durch Verstärkungsfaktoren der nachfolgenden Elektronik gegeben. Der schnelle Anstieg ist eine Folge des Durchbruchs, bei dem die Kapazität der vorgespannten Diode bis unter die Durchbruchsspannung entladen wird, der langsamere Abfall ergibt sich aus der RC-Zeitkonstanten in Kombination mit dem sog. "Quenching"-Widerstand. Die Fläche unter der Signalkurve entspricht sozusagen der Ladung, welche bei dem Durchbruch freigesetzt wurde. Ein SiPM mit für die konfokale Mikroskopie sinnvollen Dimensionen (z.B. 1,3mm x 1,3mm; 200-1500 einzelne, parallel geschaltete Zellen) liefert mit großer Homogenität gleich große Signale beziehungsweise gleichviel Ladung für jede von einem Photon getroffene Zelle.

Grundsätzlich kann bei Photomultipliern die Datenaufnahme entweder im Zähl- oder im Integrations-Modus (auch Digital- bzw. Analog-Modus genannt) erfolgen.

Ein möglicher Ansatz, ein zur Anzahl der einfallenden Photonen proportionales Signal zu erhalten, besteht darin, die Ereignisse zu zählen, indem das analoge Signal mit einer Schwelle verglichen wird und bei jeder Überschreitung ein Zähler erhöht wird. Sobald sich Pulse überlagern, ist die gemessene Zählrate allerdings kleiner als die tatsächliche Anzahl von Ereignissen. Bei Kenntnis der vorliegenden Photonenstatistik sowie bei bekannter Pulsform kann man auf den Fehler Rückschlüsse ziehen und gegebenenfalls korrigieren. Im Fall von gepulster Anregung ist für eine erfolgreiche Korrektur auch die Kenntnis der Fluoreszenzlebensdauer nötig. D.h. die Korrektur hat probenabhängig zu erfolgen, was mit Mehraufwand verbunden ist.

Eine weitere Möglichkeit, die Fehler beim Zählen von Pulsen möglichst klein zu halten, besteht darin, die Pulse in eine möglichst kurze Form zu bringen. Dies kann entweder durch Hochpassfiltern des Ausgangssignals oder durch einen kapazitiven Abgriff zwischen Diode und Quenching-Widerstand, wie z.B. in US 2013/0099100 A1 gezeigt, geschehen. Damit wird jedoch die Signalhöhe reduziert.

Den genannten Methoden ist gemeinsam, dass ein Sättigungseffekt beim Zählen auftritt und dass beispielsweise Pulse mit doppelter Höhe nicht von Einfachpulsen unterschieden werden können.

Die WO 2012/017762 zeigt ein Verfahren, bei dem ein Messsignal einer Schwellwertverarbeitung dahingehend unterzogen wird, dass nur oberhalb des Schwellwerts liegende Signalwerte berücksichtigt werden. Die Fläche unter den Pulsen wird dann ermittelt, um daraus die Photonenzahl zu bestimmen. Durch die Schwellwertverarbeitung sind jedoch Fläche und Photonenzahl nicht immer proportional. Daher bedarf es zur Berechnung sowohl eines Bezugswerts als auch des Schwellwerts.

Sucbei Moon et al. "Analog single-photon counter for high-speed scanning micoscopy" Optics Express Vol. 16, Issue 18, pp. 13990-14003 (2008) beschreibt ein Verfahren zum Zählen von Photonen, wobei durch einen Verstärker eine Integration eines Messsignals, das durch eine Ableitung und Schwellwertvergleich erhalten wurde, stattfindet.

US 2008/099689 A1 betrifft ein bildgebendes Detektorsystem mit einem Strahlungsdetektor mit mehreren Pixeln zum Erzeugen mehrerer Detektionssignale als Reaktion auf Strahlung. Jedes der Pixel wird verwendet, um ein entsprechendes Erfassungssignal zu erzeugen. Das bildgebende Detektorsystem umfasst eine Vielzahl von Photonenzählkanälen. Jeder Photonenzählkanal ist mit einem entsprechenden Pixel gekoppelt, um das entsprechende Erfassungssignal zu empfangen und zu verarbeiten. Jeder Photonenintegrationskanal ist mit einem entsprechenden Pixel gekoppelt, um das entsprechende Erfassungssignal zu empfangen und zu verarbeiten. Ein Bildprozessor empfängt Ausgaben von den Photonenzählkanälen und den Photonenintegrationskanälen, wobei der Bildprozessor angepasst ist, ein Bild unter Verwendung der empfangenen Ausgaben zu erzeugen.

US 6 188 473 B1 betrifft ein Verfahren und ein System zur Photodetektion, bei dem Messsignale im Photonenzählbetrieb und Strombetrieb parallel an einem Photomultiplier über zwei Kanäle abgreifbar sind, von denen einer ein Photonenzählkanal (Impulszählkanal) und der andere ein analoger Signalübertragungskanal ist. Die Signale werden kontinuierlich gespeichert und in einem Mikroprozessor verarbeitet. Durch den Zweikanalbetrieb kann der Dynamikbereich des Photomultipliers erweitert werden, indem für jedes Zeitintervall der Messwert für das zu messende Licht anhand einer einstellbaren Bereichsgrenze aus dem Kanal ausgewählt wird, der als Photonenzähler arbeitet oder der im Strommodus betrieben wird.

JP 2004 144734 A betrifft eine Rasterlasermikroskopvorrichtung, deren Systemsteuerung einen A/D-Wandlungstakt an einen A/D-Wandler einer photometrischen Vorrichtung und einen Pixeltakt an eine arithmetische Einheit der photometrischen Vorrichtung ausgibt. Ein optischer Detektor wandelt Licht, das von einer Probe emittiert und über einen dichroitischen Spiegel eingegeben wird, in ein analoges elektrisches Signal um. Der A/D-Wandler wandelt das analoge elektrische Signal synchron mit dem A/D-Wandlungstakt in digitale Daten um. Eine Arithmetikeinheit berechnet die digitalen Daten synchron mit dem Pixeltakt und gibt Luminanzdaten für jedes Pixel aus. Eine Speichervorrichtung speichert die Luminanzdaten für jedes Pixel.

Es ist daher wünschenswert, ein verbessertes Verfahren zum Zählen von Photonen anzugeben.

### Offenbarung der Erfindung

Erfindungsgemäß werden ein Verfahren zum Zählen von Photonen mittels eines Halbleiter-Photomultipliers, insbesondere Silizium-Photomultipliers (SiPM), sowie eine Recheneinheit und ein Computerprogramm zu dessen Durchührung mit den Merkmalen der unabhängigen Patentansprüche vorgeschlagen. Auch ein Mikroskopsystem, insbesondere eine Konfokalmikroskopsystem oder Raster-Konfokalmikroskopsystem, ist Gegenstand der Erfindung. Vorteilhafte Ausgestaltungen sind Gegenstand der Unteransprüche sowie der nachfolgenden Beschreibung.

Mit der vorgestellten Erfindung ist es möglich, das Rohsignal eines Photomultipliers wie bei zählenden Detektoren auszuwerten, ohne dass durch Überlagerungen o.ä. Informationen verloren gehen, da die Grundlage der Erfindung eine Integrations- bzw. Summenmessung über einen beliebig langen Zeitraum bildet. Dieses (analoge) integrierte Messsignal wird unter Verwendung eines einer bestimmten Anzahl von in den Photomultiplier eingefallenen Photonen entsprechenden Integralproportionalitätswerts - insbesondere bereits während und nicht erst nach der Integrations- bzw. Summenmessung - ausgewertet, um die Anzahl der Photonen zu ermitteln. Das erfindungsgemäße Verfahren kann mit Vorteil auch dann eingesetzt werden, wenn ein auf eine Probe gerichtetes Anregungssignal selbst gepulst ist.

In einem Photomultiplier entspricht jedes einfallende bzw. detektierte Photon einer bestimmten Ladung und somit einer bestimmten Fläche unter dem Messsignal. Aus dieser Fläche, welche dem Wert des integrierten Messsignals entspricht, kann man bei Kenntnis des Proportionalitätsfaktors, welcher dem Integralproportionalitätswert entspricht, direkt auf die Anzahl der detektierten Photonen schließen. Dies kann besonders vorteilhaft durch Auswertung des Messsignals ohne weitere Pulsformung erfolgen. Insbesondere eine Schwellwertbearbeitung ist nicht notwendig und sollte unterbleiben, um das Ergebnis nicht zu verfälschen. Die Verteilung der Pulse hat dabei nahezu keinen Einfluss auf das Ergebnis, da dieses allein von der Fläche unter den Pulsen und nicht von deren zeitlicher Anordnung, sprich überlagert oder separiert, abhängt.

Die Erfindung eignet sich besonders für die Verwendung in der Konfokalmikroskopie, da dort sehr genaue Messungen auch von überlagerten Photonen nötig sind. Trotz der Anforderung an die Genauigkeit der erzielbaren Ergebnisse können nun durch Einsatz der Erfindung auch relativ preisgünstige und robuste Photomultiplier, insbesondere SiPM eingesetzt werden.

Eine erfindungsgemäße Recheneinheit, z.B. ein Steuergerät eines Mikroskops, insbesondere Konfokalmikroskops, ist, insbesondere programmtechnisch, dazu eingerichtet, ein erfindungsgemäßes Verfahren durchzuführen.

Auch die Implementierung des Verfahrens in Form eines Computerprogramms ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung beschrieben.

### Figurenbeschreibung

- Figur 1: zeigt einen Puls in einem Rohsignal eines Silizium-Photomultipliers, der bei Detektion eines Photons auftritt.
- Figur 2: zeigt einen zeitlichen Verlauf eines beispielhaften Rohsignals eines Silizium-Photomultipliers.
- Figur 3: zeigt einen zeitlichen Verlauf eines Messsignals, welches aus dem Rohsignal aus Figur 2 nach Abzug von Rauschen erhalten wird.
- Figur 4: zeigt einen zeitlichen Verlauf eines integrierten Messsignals, welches durch zeitliches Integrieren des Messsignals aus Figur 3 erhalten wird.
- Figur 5: zeigt einen zeitlichen Verlauf des integrierten Messsignals, welches durch Abziehen von Integralproportionalitätswerten von dem integrierten Messsignal aus Figur 4 erhalten wird.
- Figur 6: zeigt einen zeitlichen Verlauf von isolierten Pulsen, wie sie aus den Signalen gemäß den Figuren 4 oder 5 erhalten werden.
- Figur 7: zeigt eine Übersicht über die typischen Elemente eines konfokalen Mikroskops mit einer Anordnung aus einem Photomultiplier und einer Recheneinheit gemäß einer bevorzugten Ausführungsform der Erfindung in schematischer Ansicht.

### Detaillierte Beschreibung der Zeichnung

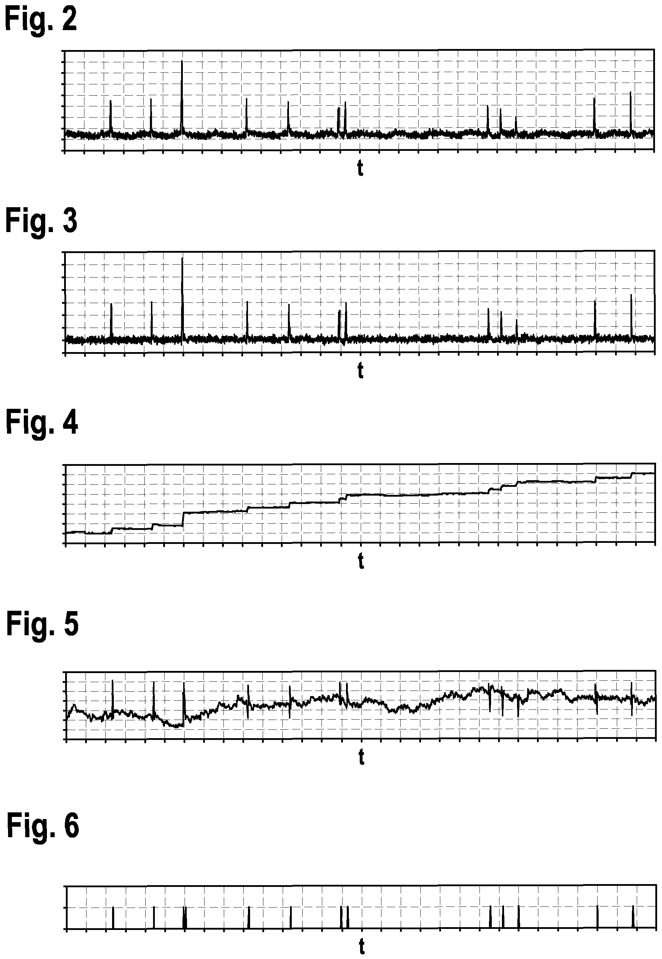

Ein Ablauf einer bevorzugten Ausführungsform der Erfindung wird im folgenden unter Bezugnahme auf die Figuren 2 bis 6 beschrieben, in denen jeweils Signalverläufe über die Zeit dargestellt sind. Dabei ergibt sich der Signalverlauf einer Figur mit einer höheren Nummer üblicherweise aus dem Signalverlauf einer Figur mit der nächstniedrigeren Nummer durch Durchführung von Verfahrensschritten einer bevorzugten Ausführungsform der Erfindung.

In Figur 2 ist ein zeitlicher Verlauf eines beispielhaften Rohsignals dargestellt, wie es von einem beispielsweise als Silizium-Photomultiplier (SiPM) ausgebildeten Photomultiplier im Betrieb erzeugt wird. Die Länge des dargestellten Ausschnitts ist ca. 60 µs. Dem SiPM ist insbesondere ein Analog-Digital-Wandler (ADC) nachgeschaltet, um die Signale digital verarbeiten zu können. Hierbei ist insbesondere darauf zu achten ist, dass die Abtastrate des ADC im Vergleich zu einer typischen inversen Pulsbreite hoch genug ist, so dass die Pulse sicher abgetastet werden.

Es ist erkennbar, dass das Rohsignal eine Anzahl von Pulsen zeigt, welche der Detektion von Photonen durch den SiPM entsprechen. Jeder dieser Pulse entspricht im Wesentlichen einem Puls 100 gemäß Figur 1.

Es ist erkennbar, dass der dritte Puls in etwa doppelt so hoch ist wie die übrigen Pulse, so dass davon auszugehen ist, dass hier zwei Photonen nahezu gleichzeitig detektiert wurden.

Weiterhin ist erkennbar, dass das Rohsignal sowohl rausch- als auch offsetbehaftet ist.

Vorliegend wird zunächst ein Messsignal aus dem von dem SiPM erzeugten Rohsignal gewonnen, indem das von dem SiPM erzeugte Rohsignal um ein Rauschsignal und/oder einen Offset korrigiert wird. D.h. Rauschsignal und/oder Offset werden zur Korrektur von dem Rohsignal abgezogen. Als Messsignal erhält man auf diese Weise ein kontinuierliches, um den Nullpunkt "rauschendes" Signal mit Pulsen, welche Photonenereignisse darstellen (siehe auch Figur 3). Es bietet sich in diesem Zusammenhang an, das Rauschsignal bzw. den Offset aus einem von dem SiPM in Dunkelheit erzeugten Rohsignal zu gewinnen, um möglichst nur das sog. Dunkelrauschen zu erfassen.

Zum Ermitteln des ADC-Offsets wird beispielsweise das Rohsignal ohne Beleuchtung, also lediglich mit wenigen Pulsen aufgrund von Dunkelrauschen, erfasst. Beim Dunkelrauschen ist das Auftreten der Pulse so selten, dass eine Überlagerung nahezu ausgeschlossen werden kann. Durch geeignete Filterung werden die verbleibenden Pulse unterdrückt, so dass man den Pegel des pulsfreien ADC-Signals erhält. Dazu eignet sich beispielsweise ein Medianfilter mit einem Rang>Pulsdauer.

Alternativ können die ADC-Werte auf das Auftreten eines schnellen Anstiegs untersucht werden und dann n Werte davor und m-Werte (n und m werden geeignet gewählt) danach bei der Mittelwertbildung jeweils nicht berücksichtigt werden, so dass der Verlauf eines kompletten Pulses aus der Mittelung herausgenommen wird.

In Figur 3 ist ein Verlauf des Messsignals dargestellt, welcher erhalten wird, indem der durch Median-Filterung ermittelte Offset vom Rohsignal abgezogen wird.

Das für relativ wenige Pulse erhaltene Messsignal gemäß Figur 3 kann gleichzeitig auch zur Bestimmung des Integralproportionalitätswerts verwendet werden. Somit dient das Messsignal gemäß Figur 3 gleichzeitig als Kalibriersignal.

Insbesondere wird der einer bestimmten Anzahl von in den Photomultiplier eingefallenen Photonen entsprechende Integralproportionalitätswert bestimmt, indem das Kalibriersignal über die Zeit integriert wird, um ein integriertes Kalibriersignal zu erhalten, und die Anzahl der während dieser Zeit in den Photomultiplier eingefallenen Photonen bestimmt wird. Mit Vorteil ist der Integrationszeitraum, über den das Kalibriersignal integriert wird, auswählbar.

Am Beispiel von Figur 3 werden für einen vorwählbaren Zeitraum die auftretenden Pulse z.B. durch Vergleich mit einem vorbestimmten Photonendetektionsschwellwert gezählt. Gleichzeitig wird das um den zuvor ermittelten Offset korrigierte Messsignal im selben Zeitraum integriert, beziehungsweise die Summe aller korrigierten ADC-Werte gebildet. Gemäß einer bevorzugten Ausführungsform ergibt dieser Integralwert bzw. diese Summe geteilt durch die Anzahl der gezählten Pulse den Integralproportionalitätswert, d.h. die Fläche bzw. ADC-Summe pro Photon. Im vorliegenden Beispiel wird somit als der einer bestimmten Anzahl von in den SiPM eingefallenen Photonen entsprechende Integralproportionalitätswert ein einem einzigen in den SiPM eingefallenen Photon entsprechender Integralproportionalitätswert bestimmt.

Für die eigentliche Auswertung wird im Folgenden das integrierte Messsignal gemäß Figur 4 laufend mit dem Integralproportionalitätswert verglichen und daraus die Anzahl der Photonen ermittelt. Jedes Mal wenn der Wert des integrierten Messsignals um den Integralproportionalitätswert angestiegen ist, bedeutet dies, dass eine dem Integralproportionalitätswert entsprechende Anzahl von Photonen (im vorliegenden Beispiel genau ein Photon) vom SiPM detektiert wurde.

Eine Zählung ist vorzugsweise dadurch möglich, dass die Anzahl (also der laufende Zählwert) jedes Mal um die bestimmte Anzahl (hier also Eins) erhöht wird, wenn der Wert des integrierten Signals um den Integralproportionalitätswert zugenommen hat.

Es sei betont, dass bei dem hier vorgestellten Verfahren zum Zählen von Pulsen das Überschreiten eines Schwellwerts nur für Kalibrierungszwecke herangezogen wird. Im Betrieb erfolgt die Auswertung über das Integral der Signalform.

Zur Vereinfachung der Erfassung, insbesondere um die Werte in der Recheneinheit handhabbar zu halten, wird der laufende Wert des integrierten Messsignals gemäß Figur 4 bei jedem Zählereignis um den Integralproportionalitätswert reduziert, um ein integriertes Messsignal gemäß Figur 5 zu erhalten. Gleichzeitig kann die Anzahl der Photonen bestimmt werden, indem ein Zählwert der Anzahl der Photonen jedes Mal inkrementiert wird, wenn der Integralproportionalitätswert von dem integrierten Messsignal abgezogen wird.

Die im Zusammenhang mit den Figuren 2 bis 5 geschilderten Verfahrensschritte werden vorzugsweise von einer Recheneinheit hard- und/oder softwareimplementiert ausgeführt, wobei die Recheneinheit beispielsweise als Detektor ausgebildet ist, der von einer übergeordneten Recheneinheit angesteuert werden kann und dieser beispielsweise den Zählwert und/oder einen oder mehrere der Signalverläufe gemäß den Figuren 2 bis 5, insbesondere als Digitalwertfolgen, zur Verfügung stellt.

Optional kann auch ein Ausgangssignal umfassend lediglich die Pulse gemäß Figur 6 erzeugt und ausgegeben werden, welches beispielsweise zur Zählung in der übergeordneten Recheneinheit verwendet werden kann.

Um eine eventuell auftretende Drift des Rohsignals oder Schwankungen in der Lawinenverstärkung zu kompensieren, können die Schritte zur Bestimmung von Rauschen/Offset und/oder Integralproportionalitätswerts während Beleuchtungspausen regelmäßig wiederholt werden. Alternativ oder zusätzlich kann anhand des ADC-Signals automatisch erkannt werden, wann die Beleuchtung so gering ist, dass eine erneute Bestimmung von Rauschen/Offset und/oder Integralproportionalitätswerts erfolgen kann.

Bei SiPMs können Nichtlinearitäten im Rohsignal nicht nur aufgrund von nicht erfassten Pulsen entstehen. Wird eine Zelle entladen, so liefert diese bei einem zweiten auftreffenden Photon während des Wiederaufladens nur einen entsprechend kleineren Puls. Dieser Effekt kann bei starker Beleuchtung auftreten und würde sich im Fall von klassischem Zählen durch nicht detektierte, kleinere Pulse äußern.

Bei dem hier vorgestellten Verfahren ergibt sich im Fall hoher Intensität augrund einer pro Puls geringeren Ladungsmenge eine Abweichung im Verhältnis zwischen integriertem Messsignal und Integralproportionalitätswert, d.h. die Zunahme des integrierten Messsignals für die bestimmte Anzahl Photonen ist kleiner als der Integralproportionalitätswert. Wird nämlich eine Zelle, welche sich aufgrund eines ersten Photons entladen hat, von einem zweiten Photon getroffen, bevor sie wieder vollständig aufgeladen ist, dann ist die abgegebene Ladungsmenge beim zweiten Photon geringer. Die Wahrscheinlichkeit, dass Zellen mehrfach innerhalb ihrer Aufladezeit getroffen werden, ist umso größer, je mehr Photonen/Zeit auf den Detektor einfallen. Um auch in diesem Arbeitsbereich das Verhältnis zu erhalten, kann das ADC-Signal vor der weiteren Verarbeitung korrigiert werden, indem beispielsweise Signalzunahmen, die einem bestimmten Anteil des Integralproportionalitätswerts entsprechen, auf diesen hochgerechnet werden. Dies kann beispielsweise über eine "Lookup-Tabelle" (LUT) oder anderweitige Linearisierungsfunktionen erzielt werden.

Weiterhin verteilen sich die zu detektierenden Photonen aufgrund der Bauart eines SiPM auf eine Fläche auf dem Detektor, die aus mehreren Zellen besteht. Wird jetzt durch apparative Parameter (wie z.B. die Größe sog. Pinholes, wie sie bei Konfokalmikroskopen Verwendung finden können) die Fläche, auf die sich die Photonen verteilen, reduziert, so nimmt bei gleichem ADC-Signal die Wahrscheinlichkeit zu, dass Zellen innerhalb ihrer Aufladezeit mehrfach getroffen werden. Die zur Linearisierung nötige Korrektur hängt also davon ab, auf wie viele Zellen sich die zu detektierenden Photonen verteilen. Daher kann man weiterhin die Linearisierungsfunktion der ADC-Werte dynamisch in Abhängigkeit von diesem Parameter (z.B. Pinholegröße) anpassen.

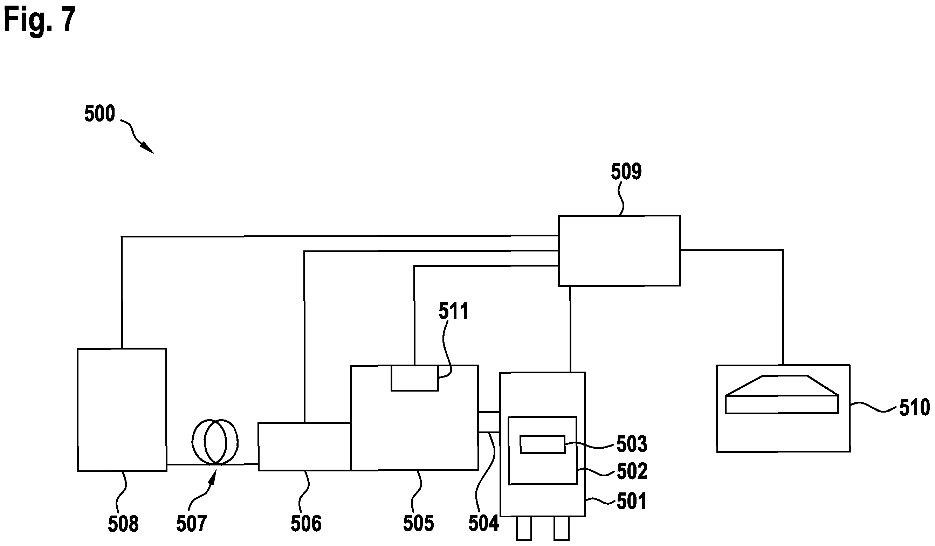

Figur 7 zeigt schematisch ein Konfokalmikroskop mit typischen Komponenten. 500 bezeichnet das Gesamtsystem. Die konfokale Raster- und Detektionseinheit ist mit 505 bezeichnet. Die dazugehörige Beleuchtungseinrichtung ist mit 506 bezeichnet. Bei 508 handelt es sich um eine Laserlichtquelle, die über eine Beleuchtungsfaser 507 mit der Beleuchtungseinrichtung 506 verbunden ist. 504 bezeichnet einen optischen Adapter für die konfokale Raster- und Detektionseinheit 505 am Mikroskopstativ 501. Innerhalb des Stativs 501 befindet sich der Objekttisch 502 mit einer zu untersuchenden Probe 503. Eine als Steuereinheit 509 ausgebildete Recheneinheit einer erfindungsgemäßen Anordnung steht über entsprechende Verbindungsleitungen mit den einzelnen Komponenten 508, 506, 505 und 501 in Verbindung. Ein Rechner mit Steuer- und Darstellungsprogrammen ist mit 510 bezeichnet; auch er steht mit der Steuereinheit 509 in Verbindung.

Die zu untersuchende Probe 503 wird über eine Mikroskopoptik beleuchtet, sowie über dieselbe Mikroskopoptik insbesondere auf eine Sensoranordnung 511 einer erfindungsgemäßen Anordnung abgebildet, die je nach Ausführungsform der konfokalen Raster- und Detektionseinheit 505 aus einem Photomultiplier oder einem Array von Photomultipliern besteht.

Innerhalb der konfokalen Raster- und Detektionseinheit 505 ist in einer ersten Variante ein klassischer konfokaler Strahlengang angeordnet, der in bekannter Weise mit einem einzelnen Pinhole und einem Strahlscanner, beispielsweise einem Spiegelscanner, aufgebaut ist.

In einer zweiten Variante befindet sich innerhalb der konfokalen Raster- und Detektionseinheit 505 ein Strahlengang, bei dem die Probe gleichzeitig mit einem oder mehreren oder in einer Richtung ausgedehnten Beleuchtungspunkten beleuchtet wird. Entsprechend werden die zu detektierenden Photonen beispielsweise mit einer geometrischen Anordnung von Lochblenden (Pinholes) selektiert. Die Sensoranordnung 511 besteht dann aus einem Array von Photomultipliern.

In der zweiten Variante des Gesamtsystems, die ein Mikroskop mit einem Sensorarray, umfasst, sind die einzelnen Photomultiplier, insbesondere SiPM entweder linear oder als zweidimensionale Photomultiplier-Matrix, angeordnet, die gemäß einer bevorzugten Ausführungsform der Erfindung ausgewertet werden.

Die erste Variante des Gesamtsystems weist einen klassischen konfokalen Strahlengang (wie vorab beschrieben) innerhalb der konfokalen Raster- und Detektionseinheit 505 auf. In diesem Fall wird der abgebildete Strahl auf einen einzelnen Photomultiplier, insbesondere einen SiPM, abgebildet, der gemäß einer bevorzugten Ausführungsform der Erfindung ausgewertet wird.

Die Funktionsweise eines in Figur 7 dargestellten Systems 500 ist an sich hinlänglich bekannt und soll daher vorliegend nicht erläutert werden.

### Bezugszeichenliste

- 500: Gesamtsystem
- 501: Mikroskopstativ mit Mikroskopoptik
- 502: Objekttisch
- 503: Probe
- 504: optischer Adapter
- 505: konfokale Raster- und Detektionseinheit
- 506: Beleuchtungseinrichtung
- 507: Beleuchtungsfaser
- 508: Laserlichtquelle
- 509: Steuereinheit
- 510: Rechner mit Steuer- und Darstellungsprogrammen
- 511: Sensoranordnung mit Photomultiplier

## Patentansprüche

1. Verfahren zum Zählen von Photonen mittels eines Photomultipliers (511), der ein Halbleiter-Photomultiplier ist,
wobei ein einfallendes Photon einen Puls in einem von dem Photomultiplier (511) erzeugten Rohsignal erzeugt,
wobei ein Messsignal aus dem Rohsignal gewonnen wird, indem das Rohsignal um ein Rauschsignal und/oder einen Offset korrigiert wird,
wobei das Messsignal über die Zeit integriert wird, um ein integriertes Messsignal zu bilden,
wobei die Anzahl der in den Photomultiplier (511) eingefallenen Photonen ermittelt wird, indem ein Wert des integrierten Messsignals mit einem Integralproportionalitätswert verglichen wird, der einer bestimmten Anzahl von in den Photomultiplier eingefallenen Photonen entspricht,
wobei der Integralproportionalitätswert jedesmal von dem integrierten Messsignal abgezogen wird, wenn der Wert des integrierten Messsignals den Integralproportionalitätswert erreicht oder überschreitet.

2. Verfahren nach Anspruch 1, wobei das Rauschsignal bzw. der Offset aus einem von dem Photomultiplier (511) in Dunkelheit erzeugten Rohsignal erhalten wird.

3. Verfahren nach einem der vorstehenden Ansprüche, wobei der Integralproportionalitätswert, welcher einer bestimmten Anzahl von in den Photomultiplier (511) eingefallenen Photonen entspricht, bestimmt wird, indem ein Kalibriersignal, welches aus einem von dem Photomultiplier (511) erzeugten Rohsignal gewonnen wird, über die Zeit integriert wird, um ein integriertes Kalibriersignal zu bilden, und die Anzahl der während dieser Zeit in den Photomultiplier (511) eingefallenen Photonen bestimmt wird.

4. Verfahren nach Anspruch 3, wobei das Kalibriersignal mit einem vorbestimmten Photonendetektionsschwellwert verglichen wird, um die Anzahl der in den Photomultiplier (511) eingefallenen Photonen zu bestimmen.

5. Verfahren nach Anspruch 3 oder 4, wobei ein normierter Integralproportionalitätswert bestimmt wird, der einem einzigen in den Photomultiplier (511) eingefallenen Photon entspricht.

6. Verfahren nach Anspruch 3, 4 oder 5, wobei das Kalibriersignal aus einem bei geringer Photonenrate und/oder in Dunkelheit von dem Photomultiplier (511) erzeugten Rohsignal gewonnen wird.

7. Verfahren nach einem der vorstehenden Ansprüche, wobei die Anzahl der Photonen bestimmt wird, indem ein Zählwert der Anzahl der Photonen jedesmal inkrementiert wird, wenn der Wert des integrierten Messsignals um den Integralproportionalitätswert zugenommen hat.

8. Verfahren nach einem der Ansprüche 1 bis 6, wobei die Anzahl der Photonen bestimmt wird, indem ein Zählwert der Anzahl der Photonen jedesmal inkrementiert wird, wenn der Integralproportionalitätswert von dem integrierten Messsignal abgezogen wird.

9. Verfahren nach einem der vorstehenden Ansprüche, wobei der Photomultiplier ein Silizium-Photomultiplier ist.

10. Verfahren nach einem der vorstehenden Ansprüche, das in einem Mikroskopsystem, Konfokalmikroskopsystem (500) oder Raster-Konfokalmikroskopsystem eingesetzt wird.

11. Anordnung aus einem Halbleiter-Photomultiplier (511) und einer Recheneinheit (509, 510), die dazu eingerichtet ist, ein Verfahren nach einem der vorstehenden Ansprüche durchzuführen.

12. Computerprogramm umfassend Befehle, die bewirken, dass die Anordnung nach Anspruch 11 ein Verfahren nach einem der Ansprüche 1 bis 10 ausführt.

13. Maschinenlesbares Speichermedium mit einem darauf gespeicherten Computerprogramm nach Anspruch 12.

14. Mikroskopsystem, Konfokalmikroskopsystem (500) oder Raster-Konfokalmikroskopsystem mit einer Anordnung nach Anspruch 11.

## Claims

1. Method for counting photons by means of a photomultiplier (511), which is a semiconductor photomultiplier,
wherein an incident photon generates a pulse in a raw signal generated by the photomultiplier (511),
wherein a measurement signal is obtained from the raw signal by correcting the raw signal for a noise signal and/or an offset,
wherein the measurement signal is integrated over time to form an integrated measurement signal,
wherein the number of photons, incident in the photomultiplier (511), is determined by comparing a value of the integrated measurement signal with an integral proportionality value, corresponding to a specific number of photons incident in the photomultiplier,
wherein the integral proportionality value is subtracted from the integrated measurement signal each time the value of the integrated measurement signal reaches or exceeds the integral proportionality value.

2. Method according to claim 1, wherein the noise signal or offset is obtained from a raw signal, generated by the photomultiplier (511) in darkness.

3. Method according to any of the preceding claims, wherein the integral proportionality value, corresponding to a specific number of photons, incident in the photomultiplier (511), is determined by integrating a calibration signal, obtained from a raw signal generated by the photomultiplier (511) over time, to form an integrated calibration signal, and the number of photons incident in the photomultiplier (511) during this time is determined.

4. Method according to claim 3, wherein the calibration signal is compared with a predetermined photon detection threshold to determine the number of photons incident in the photomultiplier (511).

5. Method according to claim 3 or 4, wherein a normalised integral proportionality value is determined, which corresponds to a single photon incident in the photomultiplier (511).

6. Method according to claim 3, 4 or 5, wherein the calibration signal is obtained from a raw signal, generated by the photomultiplier (511) at a low photon rate and/or in darkness.

7. Method according to any of the preceding claims, wherein the number of photons is determined by incrementing a count of the number of photons each time the value of the integrated measurement signal has increased by the integral proportionality value.

8. Method according to any one of claims 1 to 6, wherein the number of photons is determined by incrementing a count of the number of photons each time the integral proportionality value is subtracted from the integrated measurement signal.

9. Method according to any of the preceding claims, wherein the photomultiplier is a silicon photomultiplier.

10. Method according to any of the preceding claims, which is used in a microscope system, confocal microscope system (500) or scanning confocal microscope system.

11. Arrangement, comprising a semiconductor photomultiplier (511) and a computing unit (509, 510) which is configured to carry out a method according to any of the preceding claims.

12. Computer program comprising commands which cause the arrangement according to claim 11 to carry out a method according to any one of claims 1 to 10.

13. Machine-readable storage medium with a computer program stored thereon according to claim 12.

14. Microscope system, confocal microscope system (500) or scanning confocal microscope system with an arrangement according to claim 11.

## Revendications

1. Procédé de comptage de photons au moyen d'un photomultiplicateur (511) qui est un photomultiplicateur semi-conducteur,
un photon incident générant une impulsion dans un signal brut généré par le photomultiplicateur (511),
un signal de mesure étant obtenu à partir du signal brut en corrigeant le signal brut d'un signal de bruit et/ou d'un décalage,
le signal de mesure étant intégré dans le temps pour former un signal de mesure intégré,
le nombre de photons qui pénètre dans le photomultiplicateur (511) étant déterminé en comparant une valeur du signal de mesure intégré à une valeur de proportionnalité intégrale qui correspond à un nombre déterminé de photons pénétrant dans le photomultiplicateur,
la valeur de proportionnalité intégrale étant déduite du signal de mesure intégré chaque fois que la valeur du signal de mesure intégré atteint ou dépasse la valeur de proportionnalité intégrale.

2. Procédé selon la revendication 1, dans lequel le signal de bruit ou le décalage est obtenu à partir d'un signal brut généré par le photomultiplicateur (511) dans l'obscurité.

3. Procédé selon l'une quelconque des revendications précédentes, dans lequel la valeur de proportionnalité intégrale qui correspond à un nombre déterminé de photons pénétrant dans le photomultiplicateur (511) est déterminée en intégrant un signal d'étalonnage qui est obtenu à partir d'un signal brut généré par le photomultiplicateur (511), au fil du temps pour former un signal d'étalonnage intégré, et le nombre de photons pénétrant dans le photomultiplicateur (511) pendant ce temps est déterminé.

4. Procédé selon la revendication 3, dans lequel le signal d'étalonnage est comparé à une valeur seuil de détection de photons prédéterminé pour déterminer le nombre de photons pénétrant dans le photomultiplicateur (511).

5. Procédé selon la revendication 3 ou la revendication 4, dans lequel une valeur de proportionnalité intégrale normalisée correspondant à un seul photon pénétrant dans le photomultiplicateur (511) est déterminée.

6. Procédé selon la revendication 3, la revendication 4 ou la revendication 5, dans lequel le signal d'étalonnage est obtenu à partir d'un signal brut généré à faible taux de photons et/ou dans l'obscurité par le photomultiplicateur (511).

7. Procédé selon l'une quelconque des revendications précédentes, dans lequel le nombre de photons est déterminé en incrémentant une valeur de comptage du nombre de photons chaque fois que la valeur du signal de mesure intégré a augmenté de la valeur de proportionnalité intégrale.

8. Procédé selon l'une quelconque des revendications 1 à 6, dans lequel le nombre de photons est déterminé en incrémentant une valeur de comptage du nombre de photons chaque fois que la valeur de proportionnalité intégrale est soustraite du signal de mesure intégré.

9. Procédé selon l'une quelconque des revendications précédentes, dans lequel le photomultiplicateur est un photomultiplicateur de silicium.

10. Procédé selon l'une quelconque des revendications précédentes, qui est utilisé dans un système de microscope, un système de microscope confocal (500) ou un système de microscope confocal à grille.

11. Ensemble formé par un photomultiplicateur semi-conducteur (511) et par une unité de calcul (509, 510) qui est conçu pour mettre en oeuvre un procédé selon l'une des revendications précédentes.

12. Programme informatique comprenant des instructions qui entraînent la mise en oeuvre par l'ensemble selon la revendication 11 d'un procédé selon l'une des revendications 1 à 10.

13. Support de stockage lisible par machine ayant un programme informatique selon la revendication 12 enregistré sur lui.

14. Système de microscope, système de microscope confocal (500) ou système de microscope confocal à balayage ayant un ensemble selon la revendication 11.
